# EUROPEAN PATENT APPLICATION

(11) **EP 1 510 458 A1**
(43) Date of publication of application: **02.03.2005**
(21) Application number: 03292101.7
(22) Date of filing: 26.08.2003
(51) Int. Cl.: B64G 1/40, F03G 3/00, F03H 5/00

(54) **Lift thruster for levitating a platform**

(71) Applicant: Robinson, Norman V., 27962 Plymouth, North Carolina (US)
(72) Inventor: Robinson, Norman V., 27962 Plymouth, North Carolina (US)
(74) Representative: Domenego, Bertrand

(57) **Abstract**

A lift-providing unit for lifting and steering a platform including two weight units (2,20,27,54) disposed at opposite ends of a rotating armature (4), the weight units (2,20,27,54) being capable of generating a reaction or an impact force.

## Description

### BACKGROUND OF THE INVENTION

### 1. Field of the Invention

This invention relates to a unit for generating lift for lifting a platform and for steering the platform, more specifically to a lift-generating unit that uses recoil, impact, and centripetal forces, to lift and steer a platform upon which the unit is attached.

### 2. Prior Art

Flight has been known for centuries. Birds have long used it as a means for migration, hunting and seeking shelter. Humans have been fascinated with air travel. However, it has only been in our recent past that humans have produced machines capable of sustained flight, e.g., airplanes, helicopters, rocket ships and Hovercraft. These flying machines generate lift using rotors, propellers, compressed gas or compressed liquid. For example, lift in hovering vehicles is supplied by compressing air from below the vehicle using a rapidly rotating rotor and allowing the compressed air to generate lifting of the vehicle. Such a device has the shortcoming in that it cannot generate lift in a vacuum, e.g., outer space.

Machines that do generate lift in vacuums typically expel gases through a port located in the bottom of the vehicle. There is a need for other methods of generating lift in a vacuum. Additionally, there is always a need for finding new ways for man to fly.

### SUMMARY OF THE INVENTION

This invention satisfies the above needs. A novel lift-generating unit for generating lift in a vacuum has now been discovered. The lift-generating unit of the present invention uses a rotating armature with a movable plunger mounted thereon. Lift is produced by coupling the forces generated by rotating the armature while simultaneously moving the plunger during rotation. In one embodiment, recoil force, generated by moving the plunger, using centripetal force, generated by rotation of the armature, to provide lift. In another embodiment of the invention, impact force, generated by moving the plunger, in conjunction with centripetal force, generated by rotating the armature is used to provide lift. The difference between recoil and impact forces is essentially the position of the plunger and the direction in which the plunger is moved during rotation of the armature.

In both embodiments, an armature, which rotates about a horizontal axis, is used to provide the centripetal force while a movable plunger mounted on the armature is employed to provide the recoil/impact forces. The armature rotates in a vertical plane. A frame with a horizontally oriented axis provides the horizontal axis and support about which the armature rotates.

In both embodiments, horizontal directional movement is achieved by mechanically rotating the armature on its vertical plane using a pinion that would allow the armature to direct the force at any horizontal angle when needed. If these armatures were rotating in a horizontal plane, it would require a counter-rotating mass to avoid keeping the entire unit from spinning. However, this can be so adapted if desired.

In order to provide recoil force, the plunger is moved in a downwardly vertical direction during rotation. To provide a recoil force during the top half of rotation, the plunger is moved from a position away from the axis to a position near the axis. To provide recoil force during the bottom half of the rotation, the plunger is moved from a position near the axis to a position away from the axis. The top half of rotation being between 270° and 90°, assuming a clockwise rotation with 360°/0° at the top; and the bottom half of rotation being between about 90° and 270°, assuming clockwise rotation and 360°/0° at the top.

The recoil force can be generated either during only one half of the rotation or during both halves of the rotation. In any event, the plunger should always be positioned away from the axis during the bottom half of rotation and near the axis during the top half of rotation. It will be understood that the actual distance between the axis and the plunger will vary and that near the axis does not mean next to the axis.

In order to provide impact force, the plunger is moved in an upwardly vertical direction during rotation. To provide an impact force during the top half of rotation, the plunger is moved from a position near the axis to a position away from the axis. To provide an impact force during the bottom half of rotation, the plunger is moved from a position away from the axis to a position near the axis. The top half and bottom half of rotation being as defined above.

The impact force can be generated either during only one half of the rotation or during both halves of the rotation. In any event, the plunger should always be positioned near the axis during the bottom half of rotation and away from the axis during the top half of rotation.

It is preferred that more than one plunger can be employed in the present invention. Where a plurality of plungers are employed, the plungers are equiangular about the axis and are positioned in a common vertical plane. Preferably, there are an even number of plungers and, more preferably, either 2 or 4 plungers.

### BRIEF DESCRIPTION OF THE DRAWINGS

These and other features, aspects and advantages of the present invention may be understood with reference to the following drawings wherein:
FIG. 1 shows a sectional side view of a preferred embodiment of the invention;

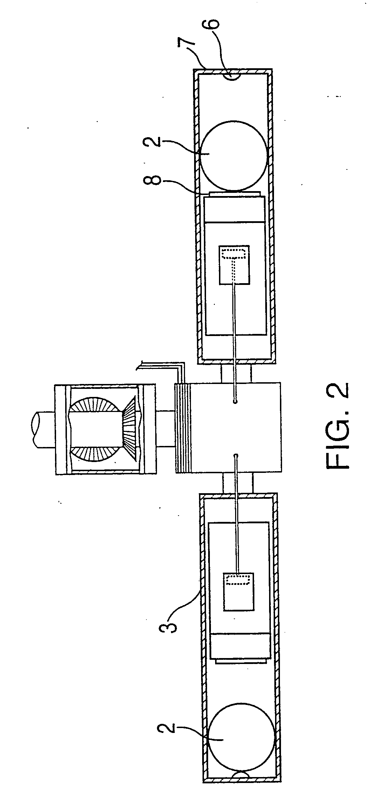

FIG. 2 shows a bottom view of the preferred embodiment in FIG. 1;
FIG. 3 shows a sectional view of another preferred embodiment on the invention;

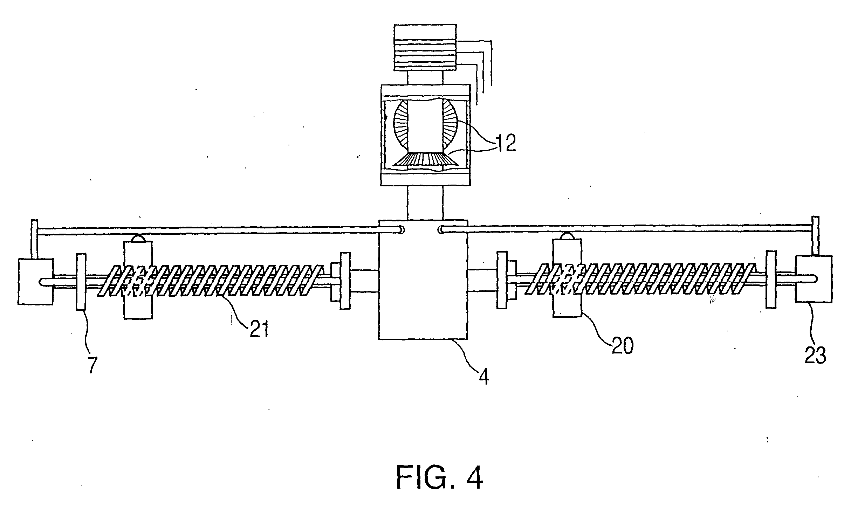

FIG. 4 shows a top view of the preferred embodiment in FIG. 3;
FIG. 5 shows a sectional view of another preferred embodiment on the invention;

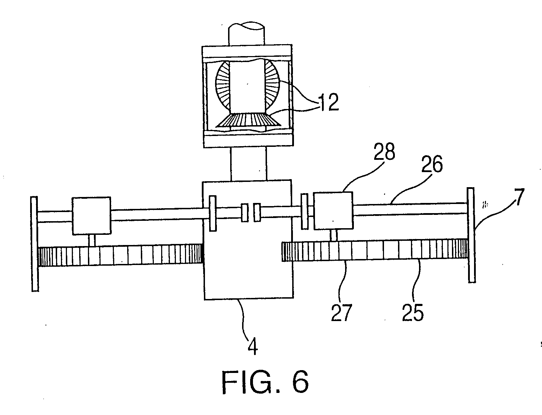

FIG. 6 shows a top view of the preferred embodiment in FIG. 5;
FIG. 7 shows a sectional view of another preferred embodiment of the present invention;

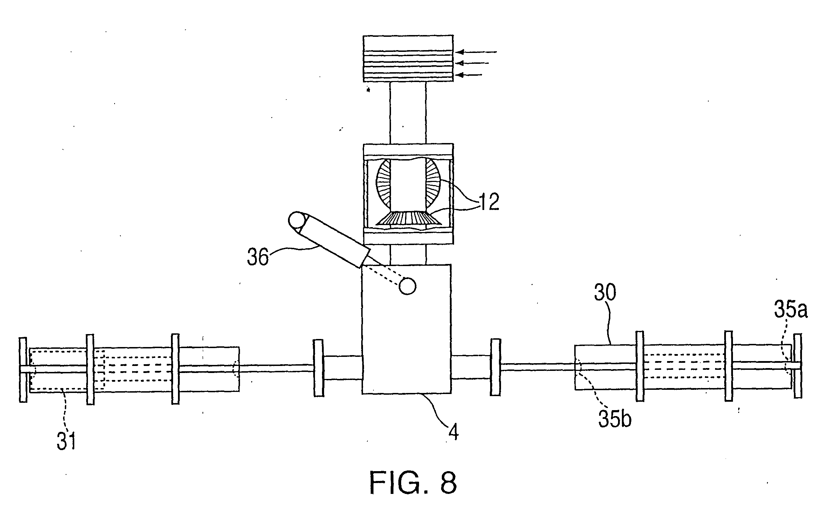

FIG. 8 shows a bottom view of the preferred embodiment in FIG. 7;
FIG. 9 shows a sectional view of another preferred embodiment of the present invention;
FIG. 10 shows a sectional side view of another preferred embodiment of the present invention;

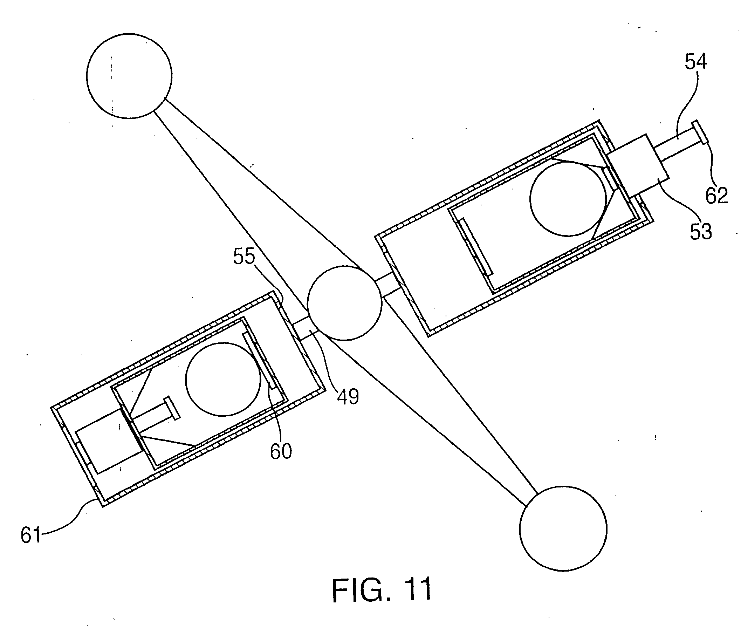

FIG. 11 shows a top view of the preferred embodiment in FIG 10;
FIG. 12 shows a side view of another preferred embodiment of the present invention;

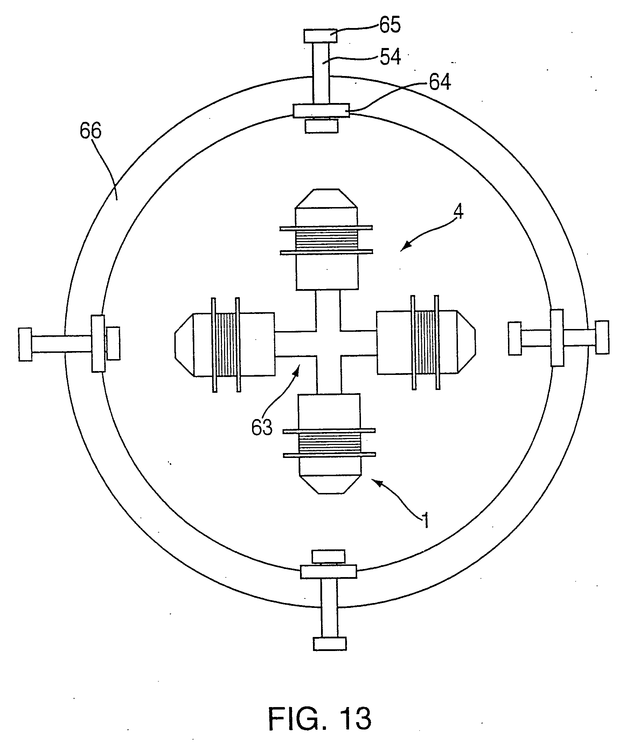

FIG. 13 shows a top view of the preferred embodiment in FIG 12.

### DETAILED DESCRIPTION OF THE INVENTION

The present invention is directed to a lift-generating unit having a plunger for generating recoil/impact energy which uses centripetal force to generate horizontal and vertical lift.

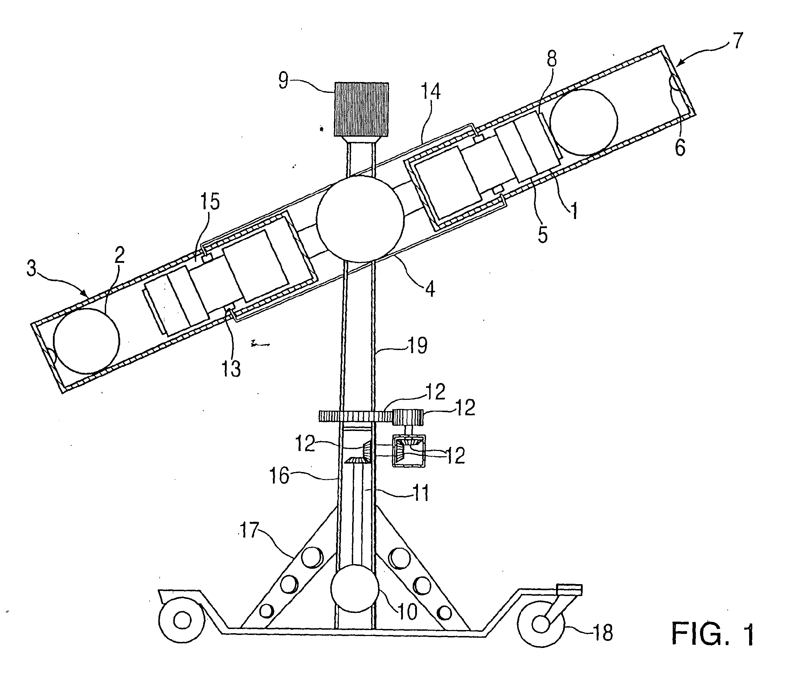

This first embodiment of the present invention can be characterized as an electromagnet and reciprocating ball horizontal mover. As shown in FIG.1, this embodiment utilizes an electromechanical arrangement for the recoil device. To accomplish this, recoil generating devices are disposed at opposite ends of a revolving armature. For levitation, each recoil generating device is activated when it is in the upward position of the armature rotation to generate downward force, causing an equal and opposite lifting force. By continuously firing recoil devices, each time one of the recoil devices is in the upward position, lift can be maintained.

Referring to FIG. 1, there is shown an inventive lift-providing unit in which the recoil device comprises an electromechanical arrangement. Each recoil device comprises an electromagnet 1 and a ball 2 having magnetic primability. Each electromagnet 1 is placed inside a tube 3 and each tube 3 is mounted on a rotating armature 4. The electromagnet 1 is positioned near the center of the tube 3, in relation to tube length, so as to face away from the center of rotation and have limited movement inside tube 3. The movement of electromagnet 1 is restricted by electromagnet holder bracket 5 that also provides electrical current when needed. The electromagnet 1 receives electrical power from electrical conductor 14 through electrical contact 13 located in serrated area 15.

When the unit is inactive, the ball 2 can rest on a rubber stopper 6 mounted on retaining plate 7 secured to the outward end of tube 3. However, depending on the position of the rotating armature 4 when not in motion, the ball 2 can rest on a magnetic protection pad 8 located on the outermost surface of the electromagnet 1. The electromagnet 1 and retaining plate thus 7 restrict the movement of ball 2.

Armature drive motor 9 supplies power to rotate armature 4 in a vertical plane. Armature direction changing motor 10 is connected to shaft 11 located in stationary portion 16. Stationary portion 16 is mounted on base 17 and is capable of movement through the use of wheels 18. Shaft 11 is in turn connected to gears 12 to provide horizontal directional movement of armature support 19. The spinning of armature 4 supplies the required centripetal force. Assuming that each ball 2 weighs 200 pounds, the armature 4 can be rotated at a speed in which each of the balls 2 displays an apparent weight of 4,500 pounds, due to the artificial gravity generated by centripetal acceleration. These numbers are, of course, used as an example.

Once centripetal acceleration is established by rotation of armature 4 by armature drive motor 9, electromagnet 1 and ball 2 each reach their respective travel limits inside tube 3. At this point, ball 2 is positioned at a distance away from electromagnet 1 and is resting against retaining plate 7 by centripetal force. The unit is now on stand-by.

A direction can be selected for movement of the entire unit by a control system (not shown in). When rotating armature 4 is in a position corresponding to the selected direction, an electronic sensor or photoelectric cell (not shown) energizes electromagnet 1 which in turn attracts ball 2 towards the axis of rotation, thus generating a recoil force. The entire unit is forced to move in the direction of the incoming ball 2 by this recoil force. As ball 2 is moving towards the axis of rotation, artificial gravity generated by centripetal force begins to slow ball 2 down to a stop. Ball 2 will then reverse direction, and travel back to rest against retaining plate 7 once again. The foregoing process is repeated each rotation and, due to the high rate of revolution of armature 4, lift can be maintained. By controlling the amount of power directed to electromagnet 1, the amount of lift can be controlled.

Inadvertent impact of ball 2 against electromagnet 1 will not greatly impede or counteract recoil energy. Electromagnet 1 has limited movement inside tube 3 which helps to absorb the impact of ball 2.

A second preferred embodiment of the invention is referred to as a screw weight reciprocator horizontal mover. The screw weight reciprocator horizontal mover uses a mechanical arrangement for recoil action to generate directional movement. It achieves this by rapidly propelling a mass towards the center of rotation of a revolving armature causing the axis of rotation to move in the direction of the incoming mass due to recoil reaction. Centripetal force created by the revolving armature counteracts the mass before it impacts the axis of rotation, which is necessary because impact would impede recoil reaction.

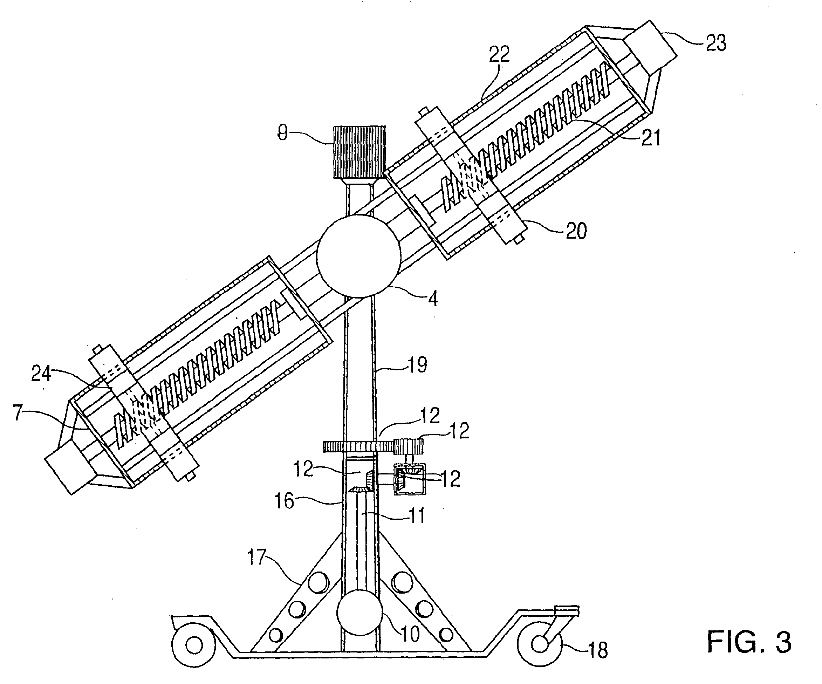

FIG. 3 illustrates the configuration of the screw weight reciprocator horizontal mover. Rotating armature 4 is comprised of screw shaft 21 and parallel rods 22. Parallel rods 22 are mounted so as to allow for movement of reciprocating weight 20 along the axis of rotating armature 4. Reciprocating weight 20 is also center taped completely through by screw shaft 21, screw shaft 21 being driven by screw shaft drive motor 23 allowing for controlled movement of reciprocating weight 20. Reciprocating weight 20 incorporates disjoint system 24 allowing reciprocating weight 20 to move along parallel rods 22 uninhibited by screw shaft 21.

Once armature drive motor 9 establishes centripetal acceleration of rotating armature 4, reciprocating weight 20 will reach its travel limit and rest on retaining plate 7. Disjoint system 24 is activated locking reciprocating weight 20 onto screw shaft 21. The unit is now on stand-by. When the machine operator selects a direction of travel, screw-shaft drive motor 23 is activated at a point during the armatures rotation corresponding to the selected direction of travel. Screw shaft drive motor 23 rotates screw shaft 21 thus rapidly propelling reciprocating weight 20 towards the axis of rotation. The entire unit moves in the direction of the incoming weight due to recoil forces.

Before reciprocating weight 20 impacts the axis of rotation, disjoint system 24 is deactivated, releasing reciprocating weight 20 from screw shaft 21. Centripetal force now impedes the movement of reciprocating weight 20, bringing reciprocating weight 20 to a stop, reversing its direction, and once again resting it against retaining plate 7. This method of operation is repeated again until the desired travel location is reached.

A third preferred embodiment of the present invention is referred to as a gear weight reciprocator horizontal mover. The gear weight reciprocator horizontal mover primarily utilizes recoil action to achieve directional movement, however some impact action is also capable. This is achieved by rapidly propelling a mass towards the center of rotation of a revolving armature causing the axis of rotation to move in the direction of the incoming mass due to recoil reaction. Centripetal force created by the revolving armature counteracts the mass before it impacts the axis of rotation, which is necessary because impact would impede recoil reaction.

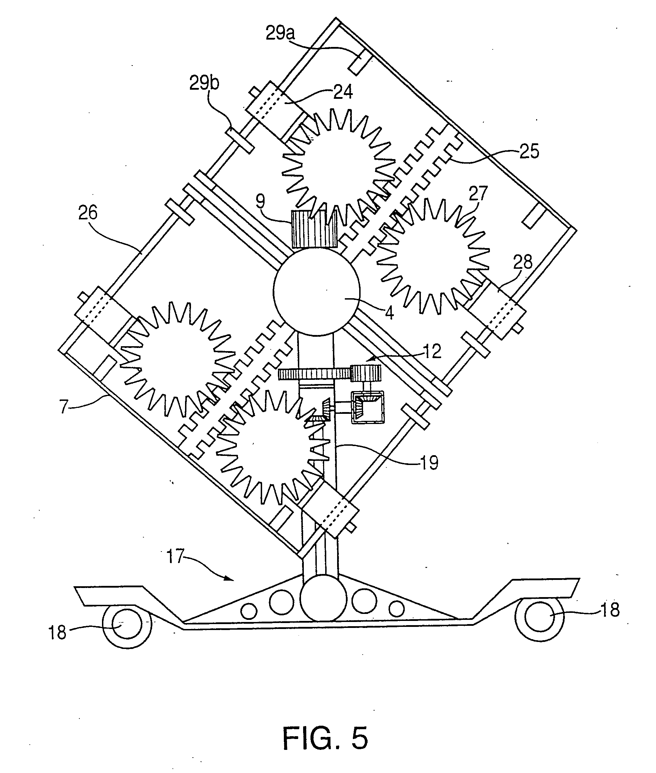

FIG. 5 illustrates the configuration of the gear weight reciprocator horizontal mover. Rotating armature 4 is comprised of rack 25 and guide rods 26. Four gear weights 27 are mounted along rack 25, two on each side of rack 25, the teeth of each gear weight 27 are able to intersect with corresponding gaps along rack 25 to allow for controlled movement of gear weight 27 along the length of rack 25. Gear weight 27 is connected to gear weight motor set 28 which are in turn mounted about guide rods 26. Gear weight motor set 28 allows for controlled movement of gear weight 27 along rack 25.

Once armature drive motor 9 establishes centripetal acceleration of rotating armature 4, gear weight 27 and gear weight motor set 28 will reach their travel limits and rest on gear weight travel stopper 29a. Disjoint system 24 is activated locking gear weight motor set 28 onto guide rods 26. The unit is now on stand-by. When the machine operator selects a direction of travel, gear weight motor set 28 is activated at a point during the armatures rotation corresponding to the selected direction of travel. Gear weight motor set 28 rotates gear weight 27 thus rapidly propelling gear weight 27 and gear weight motor set 28 towards the axis of rotation. The entire unit moves in the direction of the incoming weight due to recoil forces.

Before gear weight 27 and gear weight motor set 28 impact the axis of rotation, disjoint system 24 is deactivated, releasing gear weight motor set 28 from guide rods 26. Centripetal force now impedes the movement of gear weight 27 and gear weight motor set 28, bringing gear weight 27 and gear weight motor set 28 to a stop, reversing their direction, and once again resting them against gear weight travel stopper 29a. Gear weight travel stopper 29b is positioned to prevent gear weight 27 and gear weight motor set 28 from impacting the axis of rotation, in the event centripetal forces are not strong enough to impede and fully propel gear weight 27 and gear weight motor set 28 to their rest against gear weight travel stopper 29a. This method of operation is once again repeated until the desired travel location is reached.

A fourth preferred embodiment of the present invention is referred to as a lateral solenoid reciprocating horizontal mover. The lateral solenoid reciprocating horizontal mover uses recoil and impact action to achieve directional movement. This is achieved by rapidly propelling a mass towards the center of rotation of a revolving armature causing the axis of rotation to move in the direction of the incoming mass due to recoil reaction. Centripetal force created by the revolving armature counteracts the mass before it impacts the axis of rotation, which is necessary because impact would impede recoil reaction.

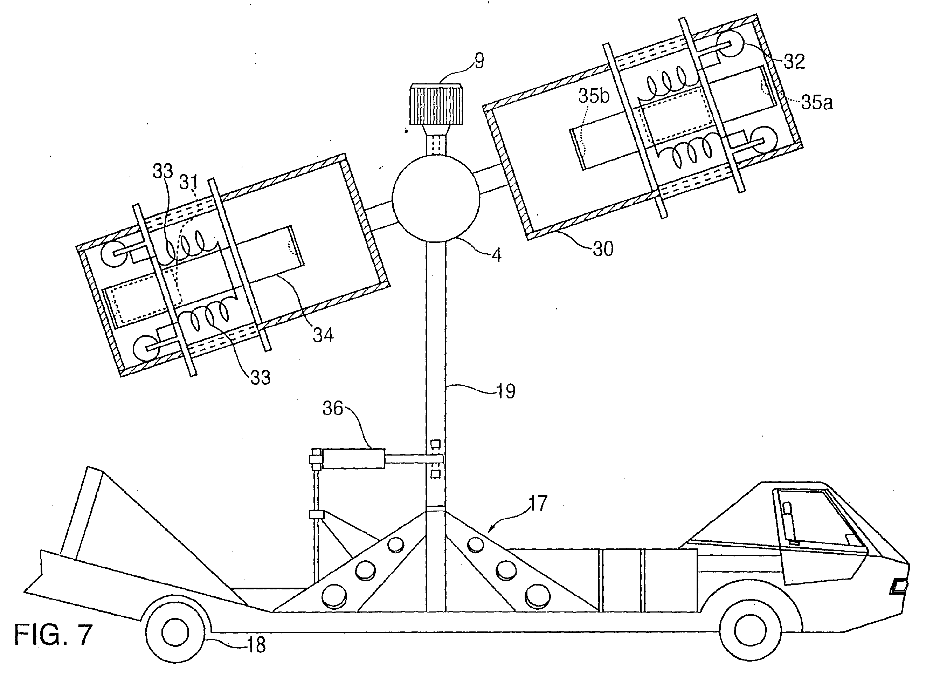

FIG. 7 .illustrates the configuration of the lateral solenoid reciprocating horizontal mover. Rotating armature 4 is comprised of parallel guide rails 30. Solenoid plunger 31 is mounted on and able to move freely about parallel guide rails 30 through the use of electrical contact rollers 32. Solenoid plunger 31 receives electrical energy from electrical contact rollers 32 through solenoid coil 33, and allows for controlled movement of solenoid plunger 31. The range of movement of solenoid plunger 31 is limited by solenoid housing 34.

Once armature drive motor 9 establishes centripetal acceleration of rotating armature 4, solenoid plunger 31 will reach its travel limit and rest on rubber stopper 35a. The unit is now on stand-by. When the machine operator selects a direction of travel, electrical energy activates solenoid plunger 31 at a point during the armatures rotation corresponding to the selected direction of travel. Solenoid plunger 31 is thus rapidly propelled towards the axis of rotation. The entire unit moves in the direction of the incoming weight due to recoil forces.

Before solenoid plunger 31 impacts the axis of rotation, the supply of electrical energy is discontinued. Centripetal force now impedes the movement of solenoid plunger 31, bringing solenoid plunger 31 to a stop, reversing its direction, and once again resting it against rubber stopper 35a. Rubber stopper 35b is positioned to prevent solenoid plunger 31 from impacting the axis of rotation, in the event centripetal forces are not strong enough to impede and fully propel solenoid plunger 31 to its rest against rubber stopper 35a. Horizontal directional movement of armature support 19 is controlled by piston and crossbar 36, rather than by shaft 11 and gears 12 as in previous embodiments. This method of operation is continuously repeated until travel destination is reached.

A fifth preferred embodiment of the present invention is referred to as an impact reciprocating horizontal mover. The impact reciprocating horizontal mover primarily uses impact action to achieve directional movement. This is accomplished by rotating an armature to strike a stationary mass thereby causing directional movement in the direction of the impact. Centripetal force created by the revolving armature can be varied to control impact action.

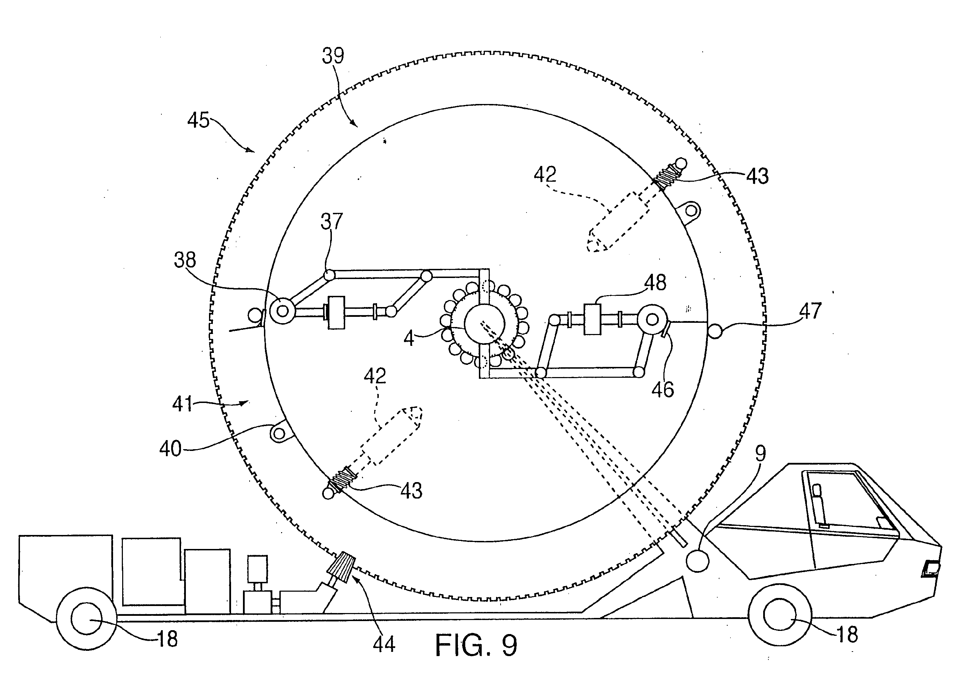

FIG. 9 illustrates the configuration of the impact reciprocating horizontal mover. Rotating armature 4 is comprised of geomantic collapsible truss 37 and truss wheel 38, all of which are housed within furring 39 for lubrication purposes. On the outer circumferential surface of furring 39 lies pinion bolt 40. Pinion bolt 40 acts to control the movement of retractable ramp 41 once impact action is achieved.

When operation is desired to begin, hydraulic piston 42 releases tension in spring 43 enabling retractable ramp 41 to fully retract and position its elongated end outside furring 39. Armature drive motor 9 then begins to establish centripetal acceleration of rotating armature 4, and truss 37 will extend and allow truss wheel 38 to make contact with the inner wall of furring 39. The unit is now on stand-by. When the machine Operator selects a direction of travel, positioning gear 44 rotates gear 45 to aim retractable ramp 41 in a direction corresponding to the selected travel direction. Hydraulic piston 42 and spring 43 now increase force against the narrowed end of retractable ramp 41, allowing the elongated end of retractable ramp 41 to enter within the inner wall of furring 39. Rotating truss wheel 38 impacts retractable weight 41 on impact drive line 46. Impact drive line 46 is propelled into impact point 47 mounted on furring 39. The entire unit moves in the direction of the propelled retractable ramp 41 due to impact action. Additional impact force is supplied by weight 48, which is mounted on and travels along truss 37.

A sixth preferred embodiment of the present invention is referred to as an external impact ball reciprocator horizontal mover. The external impact ball reciprocator horizontal mover uses recoil action to achieve directional movement. Recoil action is achieved by rapidly propelling a mass towards the center of rotation of a revolving armature causing the axis of rotation to move in the direction of the incoming mass due to recoil reaction. Centripetal force created by the revolving armature counteracts the mass before it impacts the axis of rotation, which is necessary because impact would impede recoil reaction.

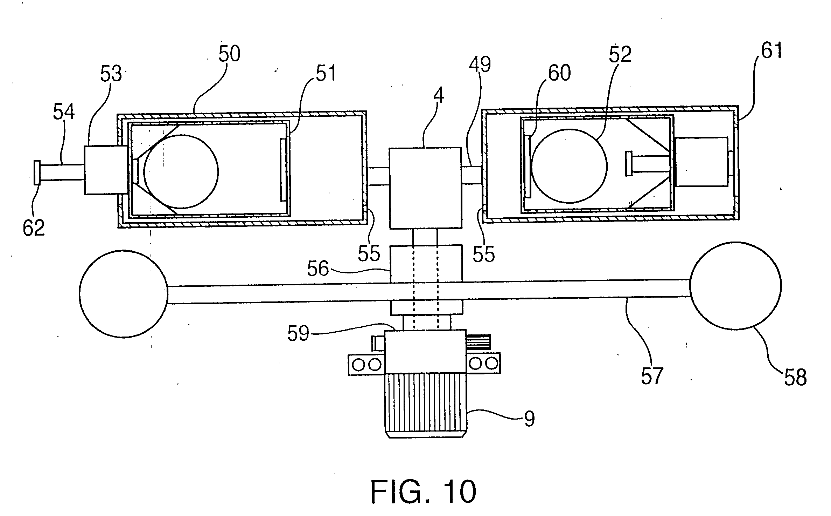

FIG. 10 illustrates the configuration of the external impact ball reciprocator horizontal mover. Platform extension 49 supports outer tube 50 on rotating armature 4. Outer tube 50 houses piston-like unit 51, which in turn houses ball 52, the configuration of such allowing for reciprocation of ball 52 within piston-like unit 51. Piston-like unit 51 is similarly able to move within outer tube 50. An opening exists in outer tube 50 located on the outer portion of rotating armature 4. This opening allows for solenoid coil 53 and plunger 54 to make contact with ball 52. Air vent 55 exists on the inner side of outer tube 50 allowing for air to escape during reciprocation of piston-like unit 51.

This unit is also equipped with counter rotating platform 56 which rotates in the opposite direction of rotating armature 4 in order to stabilize the unit. Rotating platform 56 is comprised of extension 57 and fixed ball 58. Similar to the centripetal acceleration established by rotating armature 4, rotating platform 56 establishes its own centripetal acceleration of fixed ball 58 in the rotation directional opposite to that of rotating armature 4. The force generated by rotating armature 4 is thus counteracted and neutralized by that of rotating platform 56 enabling the unit to remain in a stable state. Counter-rotation is accomplished with gear box or transmission unit 59.

Once armature drive motor 9 establishes centripetal acceleration of rotating armature 4, piston-like unit 51 and ball 52 will reach their travel limits inside outer tube 50. The unit is now on stand-by. When the machine operator selects a direction of travel, solenoid coil 53 is energized at a point during the armatures rotation corresponding to the selected direction of travel. Solenoid coil 53 causes plunger 54 to strike ball 52, thus rapidly propelling ball 52 inward towards the axis of rotation. Ball 52 then strikes piston-like unit 51, causing piston-like unit 51 along with attached solenoid coil 53 and plunger 54 to also be propelled inward. The entire unit moves in the direction of the incoming weight due to recoil forces.

At a point before piston-like unit 51 impacts the axis of rotation and before ball 52 strikes impact protection pad 60, centripetal force will impede the movement of piston-like unit 51 and ball 52, bringing piston-like unit 51 and ball 52 to a stop, reversing their direction, resting piston-like unit 51 against retaining plate 61 and ball 52 against plunger 54. Plunger retaining plate 62 restricts the movement of plunger 54 in a similar manner. This method of operation is once again repeated until the desired travel location is reached.

A seventh preferred embodiment of the present invention is referred to as a fixed electromagnetic horizontal mover. The fixed electromagnetic horizontal mover utilizes recoil and impact action to achieve directional movement. It achieves this by rapidly propelling a mass towards the center of rotation of a revolving armature causing the axis of rotation to move in the direction of the incoming mass due to recoil reaction. Similarly, impact action is generated when the mass, when returned to its starting position, strikes against the outer circumference of rotation. Centripetal force created by the revolving armature can be varied to control recoil and impact action.

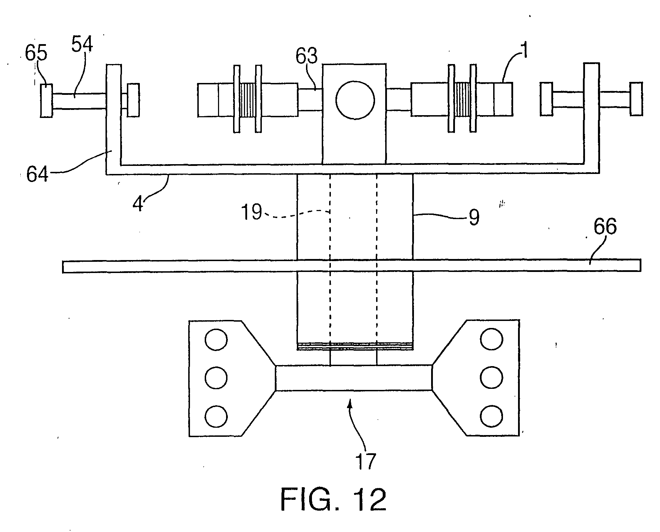

FIG. 12 illustrates the configuration of the fixed electromagnetic horizontal mover. Rotating armature 4 is comprised of electromagnet holder bracket 63, located on the inner circumferential surface of rotating armature 4, and outer bracket 64, located on the outer circumferential surface of rotating armature 4. Mounted upon electromagnet holding bracket 63 is electromagnet 1. Plunger 54 and plunger stopper 65 are mounted upon outer bracket 64.

Armature drive motor 9 establishes centripetal acceleration of rotating armature 4, causing plunger 54 to reach its travel limit and rest against plunger stopper 65. The unit is now on stand-by. When the operator selects the desired direction of travel, electromagnet 1 is activated and attracts plunger 54 toward the axis of rotation causing corresponding directional movement due to recoil action. Centripetal force created by revolving armature 4 counteracts the movement of plunger 54 and causes plunger 54 to reverse its direction of travel before it impacts plunger stopper 65. Impact force is generated creating directional movement as plunger 54 strikes plunger stopper 65 as plunger 54 once again reaches its travel limit. Recoil force and impact force must be coordinated to occur during the same degree of rotating armature 4, assuming a 360° rotation, in order to maximize directional movement. Counter-rotating secondary dish 66 is mounted on armature support 19 and is rotated in a direction opposite to that of rotating armature 4 in order to stabilize the system.

It will be understood that claims are intended to cover all changes and modifications of the preferred embodiments of the invention herein chosen for the purpose of illustration which do not constitute a departure from the spirit and scope of the invention.

## Claims

1. A lift-providing unit comprising two weight units, at least one of which is capable of generating a recoil force, said two weight units being disposed at opposite ends of a rotating armature.

2. The lift-providing unit of Claim 1 comprising an armature assembly mounted in a suspension housing to be rotatable around a center axis and a drive unit for applying a rotating force to said armature assembly to generate a centripetal force,
said armature assembly comprising an armature having a first recoil generating device disposed at a first armature end and a second recoil generating device disposed at an opposite second armature end;
said first recoil generating device and said second recoil generating device each comprising:
a ball slidably mounted between a retaining plate and an electromagnet,
said electromagnet capable of attracting said ball against said electromagnet and maintaining said ball in an attracted position until said electromagnet is de-energized, and
a control device for selectively energizing and
de-energizing each of said electromagnet.

3. A vehicle comprising a platform attached to the lift-providing unit of Claim 1.

4. The lift-providing unit of Claim 1 wherein said control device includes a timing circuit and a sensing device for registering each rotation of said armature.

5. The lift-providing unit of Claim 1 comprising an armature assembly mounted in a suspension housing to be rotatable around a center axis and a drive unit for applying a rotating force to said armature assembly to generate a centripetal force,
said armature assembly comprising an armature having a first reciprocating weight assembly disposed at a first armature end and a second reciprocating weight assembly disposed at an opposite second armature end;
said first reciprocating weight assembly and said second reciprocating weight assembly each comprising:
a reciprocating weight slidably mounted between a retaining plate and a lower base plate on at least one screw shaft passing through a corresponding fenestration in said reciprocating weight,
a screw shaft drive motor capable of rotating said screw shaft to retract said reciprocating weight against said lower base plate and maintaining said reciprocating weight against said lower base plate until said screw shaft drive motor is de-energized, and
a control device for selectively energizing said screw shaft drive motor.

6. The lift-providing unit of Claim 1 comprising an armature assembly mounted in a suspension housing to be rotatable around a center axis and a drive unit for applying a rotating force to said armature assembly to generate a centripetal force,
said armature assembly comprising a rack and guide rods, said armature assembly further comprising an armature having a first reciprocating gear weight assembly disposed at a first armature end and a second reciprocating gear weight assembly disposed at an opposite second armature end;
said first reciprocating gear weight assembly and said second reciprocating gear weight assembly each comprising:
a reciprocating gear weight slidably mounted between an upper gear weight travel stopper and a lower gear weight travel stopper on at least one rack and guide rods,
a gear weight motor set capable of rotating said reciprocating gear weight to retract against said lower gear weight travel stopper and maintaining said reciprocating gear weight against said lower gear weight travel stopper until said gear weight motor set is de-energized, and
a control device for selectively energizing said gear weight motor set.

7. The lift-providing unit of Claim 1 comprising an armature assembly mounted in a suspension housing to be rotatable around a center axis and a drive unit for applying a rotating force to said armature assembly to generate a centripetal force,
said armature assembly comprising an armature having a first recoil generating device disposed at a first armature end and a second recoil generating device disposed at an opposite second armature end;
said first recoil generating device and said second recoil generating device each comprising:
a solenoid plunger slidably mounted between an upper rubber stopper and a lower rubber stopper inside a solenoid housing,
an electrical contact roller attached to said solenoid plunger wherein said electrical contact roller energizes and de-energizes said solenoid plunger,
said electrical contact roller capable of attracting said solenoid plunger against said lower rubber stopper and maintaining said solenoid plunger in an attracted position until said solenoid plunger is de-energized, and
a control device for selectively energizing and de-energizing each of said electromagnet.

8. The lift-providing unit of Claim 1 comprising an armature assembly mounted in a suspension housing to be rotatable around a center axis and a drive unit for applying a rotating force to said armature assembly to generate a centripetal force,
said armature assembly comprising an armature having a first recoil generating device disposed at a first armature end and a second recoil generating device disposed at an opposite second armature end;
said first recoil generating device and said second recoil generating device each comprising:
a ball slidably mounted within a piston-like unit between a plunger and an impact protection pad,
said plunger comprising a solenoid coil,
said piston-like unit being slidably mounted within an outer tube,
said solenoid coil capable of energizing said plunger to propel said ball against said impact protection pad, and
a control device for selectively energizing and de-energizing each of said solenoid coil.

9. The lift-providing unit of Claim 8 comprising a counter rotating platform which rotates in the opposite direction of said armature assembly, and
said counter rotating platform comprising an extension and a fixed ball.

10. A lift-providing unit comprising two weight units, at least one of which is capable of generating an impact force, said two weight units being disposed at opposite ends of a rotating armature.

11. The lift-providing unit of Claim 10 comprising an armature assembly and a furring wherein said armature assembly is mounted in a suspension housing to be rotatable around a center axis and a drive unit for applying a rotating force to said armature assembly to generate a centripetal force, said armature assembly comprising an armature having a first impact generating device disposed at a first armature end and a second impact generating device disposed at an opposite second armature end,
said furring comprising a retractable ramp wherein said retractable ramp further comprises:
an elongated end comprising an impact drive line,
a narrowed end comprising a hydraulic piston;
said first impact generating device and said second impact generating device each comprising:
a geomantic collapsible truss,
a truss wheel mounted on an upper surface of said geomantic collapsible truss,
a weight slidably mounted on said geomantic collapsible truss, and
said truss wheel being capable of striking said impact drive line.

12. A vehicle comprising a platform attached to the lift-providing unit of Claim 10.

13. The lift-providing unit of Claim 10 wherein said armature assembly and said furring are mounted concentrically within a gear.

14. The lift-providing unit of Claim 10 wherein said platform comprises a positioning gear mounted on said platform wherein said positioning gear rotates said gear.

15. The lift-providing unit of Claim 1 comprising an armature assembly and a counter-rotating secondary dish mounted in a suspension housing to be rotatable around a center axis and a drive unit for applying a rotating force to said armature assembly to generate a centripetal force,
said armature assembly comprising an armature having a first energy generating device disposed at a first armature end and a second energy generating device disposed at an opposite second armature end;
said first energy generating device and said second energy generating device each comprising:
a plunger slidably mounted between a plunger stopper and an electromagnet,
said electromagnet capable of attracting said plunger toward said electromagnet and maintaining said plunger in an attracted position until said electromagnet is de-energized, and
a control device for selectively energizing and de-energizing each of said electromagnet.
